# EUROPÄISCHE PATENTANMELDUNG

(11) **EP 3 462 045 A1**
(43) Veröffentlichungstag der Anmeldung: **03.04.2019**
(21) Anmeldenummer: 17193683.4
(22) Anmeldetag: 28.09.2017
(51) Int. Cl.: F16B 37/06

(54) **BLINDNIETELEMENT SOWIE VERWENDUNG HIERFÜR**

(71) Anmelder: Hanratty, Paul, Southampton SO31 9BQ (GB)
(72) Erfinder: Hanratty, Paul, Southampton SO31 9BQ (GB)
(74) Vertreter: Quermann, Helmut

(57) **Zusammenfassung**

Die Erfindung betrifft ein Blindnietelement (1). Ferner betrifft die Erfindung eine Verwendung des Blindnietelements (1). Das Blindnietelement (1) weist einen Setzkopf (2) und einen in einer axialen Richtung (Z) des Blindnietelements (1) an den Setzkopf (2) angrenzenden Schaft (3) auf, wobei der Schaft (3) im Bereich seines dem Setzkopf (2) abgewandten Endes ein Innengewinde (4) oder einen Verbindungsabschnitt für einen Gewindebolzen und zwischen dem Innengewinde (4) bzw. dem Verbindungsabschnitt für den Gewindebolzen und den Setzkopf (2) einen Verformungsabschnitt (5) aufweist, wobei eine Wandung (6) des Schafts (3) im Bereich des Verformungsabschnitts (5) eine Schwächung aufweist, zur Ausbildung eines Schließkopfes nach einem Verformen des Blindnietelements (1). Des Weiteren weist das Blindnietelement (1) ein Stützelement (9) auf, wobei der Verformungsabschnitt (5) in der axialen Richtung (Z) des Blindnietelements (1) zwischen dem Setzkopf (2) und dem Stützelement (9) ausgebildet ist. Zumindest Teilbereiche des Stützelements (9) stehen in einer radialen Richtung (Y) gegenüber dem Verformungsabschnitt (5) hervor.

## Beschreibung

Die Erfindung betrifft ein Blindnietelement mit einem Setzkopf und einem in einer axialen Richtung des Blindnietelements an den Setzkopf angrenzenden Schaft, wobei der Schaft im Bereich seines dem Setzkopf abgewandten Endes ein Innengewinde oder einen Verbindungsabschnitt für einen Gewindebolzen und zwischen dem Innengewinde bzw. dem Verbindungsabschnitt für den Gewindebolzen und dem Setzkopf einen Verformungsabschnitt aufweist, wobei eine Wandung des Schafts im Bereich des Verformungsabschnitts eine Schwächung aufweist, zur Ausbildung eines Schließkopfes nach einem Verformen des Blindnietelements. Ferner betrifft die Erfindung eine Verwendung des Blindnietelements.

Derartige Blindnietelemente sind beispielsweise als Blindnietmutter oder Blindnietgewindebolzen ausgebildet.

Blindnietelemente haben sich für Befestigungsaufgaben bewährt, bei denen eine Schraubverbindung im Bereich dünnwandiger Materialien, beispielsweise Blechen, erforderlich ist, in die normalerweise kein Gewinde geschnitten werden kann.

Blindnietelemente bilden den Gegenflansch - Schließkopf - durch Wulstbildung, also eine Materialfalte. Je geringer die Materialstärke eines dünnwandigen Gegenstandes, insbesondere eines Bleches ist, mit dem das Blindnietelement definierter Abmessung zu verbinden ist, desto größer ist typischerweise der Außendurchmesser des Wulstes.

Ist das Blindnietelement beispielsweise als Blindnietmutter ausgebildet, wird dieses in dem Blech befestigt und stellt nach dessen Befestigung ein Innengewinde für eine Schraubverbindung zur Verfügung. Das Setzen der Blindnietmutter erfolgt in der Regel derart, dass der Schaft der Blindnietmutter zunächst in ein vorgefertigtes Setzloch des Bauteils, insbesondere eines Bleches, eingeführt wird. Im Anschluss daran werden die Blindnietmutter und das Bauteil mit einem geeigneten Werkzeug, welches typischerweise einen rotierbaren und axial verschiebbaren Gewindedorn aufweist, vernietet, indem der Gewindedorn von der Setzkopfseite aus in das Innengewinde des Schafts der Blindnietmutter geschraubt und dann axial so verschoben wird, dass auf der dem Setzkopf abgewandten Seite des Bauteils eine Stauchung des Verformungsabschnitts erfolgt und sich somit zwischen dem Gewindeanfang und der dem Setzkopf abgewandten Seite des Bauteils ein Gegenflansch ausbildet. Dieser durch Umformung des Verformungsabschnitts gebildete Gegenflansch wird auch als Schließkopf bezeichnet. Der Schließkopf verankert zusammen mit dem Setzkopf die Blindnietmutter in dem Bauteil. Im Anschluss an die Verformung der Blindnietmutter wird der Gewindedorn des Werkzeugs aus der Blindnietmutter ausgeschraubt und das Innengewinde der Blindnietmutter steht für eine Bildung einer Schraubverbindung zur Verfügung.

Ist das Blindnietelement beispielsweise als Blindnietgewindebolzen ausgebildet, weist der Schaft im Bereich seines dem Setzkopf abgewandten Endes einen Verbindungsabschnitt für einen Gewindebolzen auf. Typischerweise ist der Verbindungsabschnitt als Aufnahme ausgebildet, die den Gewindebolzen aufnimmt, wobei der Gewindebolzen im Bereich der Aufnahme mit dem Schaft des Blindnietelements verschweißt ist. Das Setzen des Blindnietgewindebolzens erfolgt entsprechend dem Setzen der Blindnietmutter, mit dem Unterschied, dass unmittelbar am Gewindebolzen gezogen wird.

Blindnietelemente, die als Blindnietmutter oder Blindnietgewindebolzen ausgebildet sind, sind in der EP 2 667 043 A1 beschrieben.

Ein Blindnietelement der eingangs genannten Art, wobei das Blindnietelement als Blindnietmutter ausgebildet ist, ist aus der US 3 789 728 A bekannt. Bei dieser weist der Schaft im Bereich seines Verformungsabschnitts einen gestuften Innendurchmesser bei konstantem Außendurchmesser auf. Der Bereich des Verformungsabschnitts, der dem Setzkopf zugewandt ist, weist eine geringere Wandstärke auf als der Bereich des Schafts, der dem Innengewinde zugewandt ist. Bei dieser Blindnietmutter ist die Schwächung der Wandung des Schafts im Bereich des Verformungsabschnitts durch mehrere in der axialen Richtung verlaufende Schwächungsstellen gebildet. Der Schaft der Blindnietmutter weist einen konstanten oder einen sich in der dem Setzkopf abgewandten axialen Richtung verjüngenden Außendurchmesser auf.

Diese Blindnietmutter hat die Aufgabe, auf der dem Setzkopf des Bauteils abgewandten Seite eine in einer radialen Richtung vom Zentrum des Setzlochs im Bauteil möglichst weit entfernte Auflage zu erreichen, um in relativ dünnen und somit labilen Materialien eine Deformierung desselben zu vermeiden, was bei Belastung zum Ausknöpfen führt bzw. führen kann. Durch die Gestaltung soll sich gleichzeitig ein großer Klemmbereich durch einen möglichst großen Schließkopf ergeben. Dabei ist vorgesehen, dass sich durch die axial verlaufenden Schwächungsstellen beim Verformen der Blindnietmutter der Verformungsabschnitt in einzelne Stege aufspaltet, sich diese Stege radial nach außen verformen, bis Abschnitte des jeweiligen Steges, die in dem unverformten Zustand axial aneinander angrenzen, in der axialen Richtung flächig aufeinander liegen. Dementsprechend bildet die vorgenannte Blindnietmutter beim Verformen der Blindnietmutter einen rosettenartigen Schließkopf mit tangential beabstandeten Schließkopfabschnitten aus. Wegen der großen Knicklänge des jeweiliges Steges ergibt sich kein eindeutiger Bereich des Schaftes, in dem die Verformung der Stege beginnt, bezogen auf ein identisches Stärkemaß des Bauteils. Aus diesem Grund kann mit einer Blindnietmutter der vorgenannten Art nicht sichergestellt werden, dass der ausgebildete Schließkopf bzw. die Abschnitte des Schließkopfes auf der dem Setzkopf abgewandten Seite des Bauteils zur Anlage kommen und dementsprechend die Blindnietmutter in der axialen Richtung der Blindnietmutter spielfrei mit dem Bauteil verbunden ist. Selbst wenn die einzelnen Abschnitte des Schließkopfes an dem Bauteil zur Anlage kommen, ist nicht sichergestellt, in welchem Abstand von der Längsachse des Schaftes der jeweilige Abschnitt an dem Bauteil anliegt.

Ein weiterer Nachteil ergibt sich dadurch, dass nicht sichergestellt ist, dass sich alle Stege identisch verformen und somit eine auf die Blindnietmutter ausgeübte Zugkraft oder Torsion möglichst gleichmäßig auf alle Abschnitte des Schließkopfes verteilt werden. Dies wirkt sich negativ auf die Zugfestigkeit und die Drehfestigkeit der Verbindung zwischen Blindnietmutter und Bauteil aus.

Ein weiterer Nachteil ergibt sich bei Verwendung einer derartigen Blindnietmutter in einem Setzloch, dessen Durchmesser größer ist als der Durchmesser des Verformungsabschnitts und/oder des in dem Setzloch angeordneten Schaftabschnitts. Wird nach der Anordnung der Blindnietmutter in diesem Setzloch eine Zugkraft auf den Schaft der Blindnietmutter in Richtung des Setzkopfes der Blindnietmutter ausgeübt, beispielsweise beim Vorgang des Setzens der Blindnietmutter oder beim Einschrauben einer Schraube in die bereits gesetzte Blindnietmutter, kann es zu einem Umformen, insbesondere einem Umbiegen, des jeweiligen Abschnitts des Schließkopfes oder des Schließkopfes in Richtung des dem Setzkopf abgewandten Endes des Schaftes kommen, da die Außenkanten des Bauteils, welche das Setzloch begrenzen, beabstandet zu dem Schaft der Blindnietmutter liegen und somit eine Hebelkraft auf den jeweiligen Abschnitt des Schließkopfes ausüben. Eine derartige Verformung wirkt sich zum einen negativ auf die axiale Lage des bereits gesetzten Blindniets aus, zum anderen führt eine derartige Verformung der Abschnitte des Schließkopfes dazu, dass zwischen den Abschnitten des Schließkopfes und dem Bauteil lediglich eine Linienberührung im Bereich der das Setzloch umschließenden Außenkante des Bauteils vorliegt. Eine bloße Linienberührung zwischen dem Schließkopf und dem Bauteil wirkt sich insbesondere negativ auf die Torsionsfestigkeit der Verbindung zwischen Blindnietmutter und Bauteil aus. Insbesondere kann es bei einer derartigen Linienberührung bei Aufbringung von Torsionskräften zu einer Materialabspanung zwischen Bauteil und Schließkopf der Blindnietmutter kommen.

Aufgabe der vorliegenden Erfindung ist es, ein Blindnietelement der eingangs genannten Art so weiterzubilden, dass bei diesem die Nachteile der Blindnietelemente gemäß dem erörterten Stand der Technik vermieden werden. Weiterhin ist es Aufgabe der Erfindung eine Verwendung des erfindungsgemäßen Blindnietelements anzugeben.

Gelöst wird die Aufgabe durch ein Blindnietelement, das die Merkmale des Patentanspruchs 1 aufweist, und eine Verwendung gemäß Patentanspruch 15.

Demnach weist das Blindnietelement ein Stützelement auf, wobei der Verformungsabschnitt in der axialen Richtung des Blindnietelements zwischen dem Setzkopf und dem Stützelement ausgebildet ist. Zumindest Teilbereiche des Stützelements stehen in einer radialen Richtung gegenüber dem Verformungsabschnitt hervor.

Beim Setzen des Blindnietelements verschiebt sich aufgrund der Verformung des Verformungsabschnitts das Stützelement in Richtung des Setzkopfes des Blindnietelements, wobei die radial hervorstehenden Teilbereiche des Stützelements eine Abstützfläche für den, durch Verformung des Verformungsabschnitts nach radial außen, gebildeten Schließkopf bilden.

Durch die hervorstehenden Teilbereiche des Stützelements wird vermieden, dass bei einer Krafteinwirkung auf das Blindnietelement in der axialen Richtung des Blindnietelements die radial hervorstehenden Bereiche des Schließkopfes in Richtung des dem Setzkopf abgewandten Endes des Schafts umgebogen werden, da das Stützelement eine Anlagefläche bzw. einen Anschlag für den Schließkopf bildet, der die Verformung bzw. das Umbiegen des Schließkopfes in Richtung des dem Setzkopf abgewandten Endes des Schafts begrenzt oder zumindest erschwert.

Das Blindnietelement ist insbesondere als Blindnietmutter oder als Blindnietgewindebolzen ausgebildet.

Der Verbindungsabschnitt des als Blindnietgewindebolzen ausgebildeten Blindnietelements ist vorzugsweise als Aufnahme ausgebildet, die den Gewindebolzen aufnimmt, wobei der Gewindebolzen im Bereich der Aufnahme vorzugsweise mit dem Schaft des Blindnietelements verschweißt ist. Es ist aber auch denkbar, dass der Verbindungsabschnitt als Innengewinde ausgebildet ist, in das der Gewindebolzen eingeschraubt ist. Der Gewindebolzen kann auch integraler Bestandteil des Blindnietelements sein.

Insbesondere ist vorgesehen, dass die radial hervorstehenden Teilbereiche des Stützelements nach dem Verformen des Blindnietelements den aus dem Verformungsabschnitt gebildeten Schließkopf auf einer dem Setzkopf abgewandten Seite hintergreifen.

Als besonders vorteilhaft wird es angesehen, wenn die radial hervorstehenden Bereiche des Stützelements den gebildeten Schließkopf auf der dem Setzkopf abgewandten Seite kontaktieren, insbesondere den Schließkopf an das Bauteil anpressen. Dadurch wird ein axiales Spiel zwischen dem Blindnietelement und dem Bauteil vermieden. Zudem werden die Zugfestigkeit und die Drehfestigkeit der Verbindung zwischen Blindnietelement und dem Bauteil gegenüber herkömmlichen Blindnietelementen erhöht.

Das Blindnietelement eignet sich insbesondere für Setzlöcher, deren Durchmesser größer ist als der Durchmesser des Schaftes im Bereich des Verformungsabschnitts. Entsprechend weist das Bauteil eine das Setzloch umlaufend umschließende Außenkante auf, welche radial beabstandet zum unverformten Schaft des Blindnietelements angeordnet ist. Beim Angreifen einer in die axiale Richtung gerichteten Zugkraft an dem Blindnietelement wird durch die zum Schaft beabstandete Außenkante radial beabstandet zum Schaft eine Kraft in den Schließkopf eingeleitet, welche zu einem Umbiegen des Schließkopfs bzw. eines Abschnitts des Schließkopfs in Richtung des dem Setzkopf abgewandten Endes des Schafts führen würde. Durch das Stützelement wird ein Umbiegen bzw. Verformen des Schließkopfes oder der Abschnitte des Schließkopfes verhindert, begrenzt oder zumindest erschwert, da das Stützelement die in den Schließkopf eingeleiteten Kräfte aufnimmt.

Als besonders vorteilhaft wird es angesehen, wenn ein Abschnitt des Schaftes, der nach dem Einbringen des Blindnietelements in das Setzloch des Bauteils einen Durchmesser aufweist, der geringer ist als der Durchmesser des Setzlochs. Mit einem derart gestalteten Blindnietelement ist es möglich, das Blindnietelement in unterschiedlichen Positionen in dem Setzloch anzuordnen, um dadurch beispielsweise Fertigungstoleranzen oder dergleichen auszugleichen. Die Nachteile, die bei der Verwendung von Blindnietelementen der eingangs genannten Art bei einer derartigen Verbindung auftreten, werden durch das Stützelement bzw. die hervorstehenden Teilbereiche des Stützelements überwunden oder zumindest abgeschwächt.

Als besonders vorteilhaft wird es angesehen, wenn der Durchmesser des Abschnitts des Schafts, der in dem Setzloch angeordnet ist, identisch ist zu einem Durchmesser des Verformungsabschnitts.

Als besonders vorteilhaft wird es angesehen, wenn die Wandung des Verformungsabschnitts mehrere in der axialen Richtung verlaufende Schwächungsstellen, insbesondere identisch ausgebildete Schwächungsstellen aufweist. Eine derartige Gestaltung des Blindnietelements begünstigt die Ausbildung eines Schließkopfs mit einer großen radialen Abmessung. Durch die in der axialen Richtung verlaufenden Schwächungsstellen wird die Bildung eines Schließkopfs mit mehreren tangential beabstandeten, sich in der radialen Richtung erstreckenden Schließkopfabschnitten begünstigt. Infolgedessen bildet sich bei der Verformung des Verformungsabschnitts ein Schließkopf, der rosettenartig ausgebildet ist. Die Schwächungsstellen sind insbesondere identisch ausgebildet.

Als besonders vorteilhaft hinsichtlich der Bildung eines rosettenartigen Schließkopfes sind die Schwächungsstellen in einer bevorzugten Ausführungsform des Blindnietelements als vorzeigweise die Wandung durchsetzende Schlitze ausgebildet.

Um eine möglichst gute Stützwirkung des Stützelements zu erreichen, wird es als vorteilhaft angesehen, wenn eine radiale Abmessung des Stützelements identisch oder geringfügig kleiner ist als eine radiale Abmessung des Setzlochs, insbesondere ein Außendurchmesser des Stützelements identisch oder geringfügig kleiner ist als ein Durchmesser des Setzlochs.

Als besonders vorteilhaft wird es angesehen, wenn eine axiale Abmessung des Verformungsabschnitts mindestens das Zweifache einer radialen Abmessung eines radial gegenüber dem Verformungsabschnitt hervorstehenden Teilbereichs des Setzkopfes beträgt. Insbesondere beträgt diese axiale Abmessung das Zwei- bis Vierfache dieser radialen Abmessung.

Vorzugsweise ist das Stützelement ringförmig und/oder als Flansch ausgebildet.

In einer Ausführungsform des Blindnietelements ist das Stützelement durch einen Teilabschnitt des Schafts gebildet. In diesem Zusammenhang wird es als besonders vorteilhaft angesehen, wenn das Blindnietelement einteilig ausgebildet ist.

Es ist aber auch durchaus denkbar, dass das Stützelement durch ein separates Bauteil gebildet ist, welches mit dem Schaft des Blindnietelements verbunden ist.

Die Verbindung zwischen dem Schaft und dem Stützelement kann beispielsweise durch eine Schraubverbindung, Klebeverbindung, Schweißverbindung, Clinchverbindung, Crimpverbindung oder dergleichen gebildet sein.

In einer Ausführungsform des Blindnietelements ist vorgesehen, dass das Blindnietelement eine Hülse aufweist, wobei der Schaft innerhalb der Hülse angeordnet und mit der Hülse verbunden ist, wobei die Hülse das Stützelement aufweist. In diesem Zusammenhang ist insbesondere vorgesehen, dass ein Teilabschnitt der Hülse das Stützelement bildet.

Hinsichtlich der Hülse ist in einer vorteilhaften Weiterbildung des Blindnietelements vorgesehen, dass die Hülse einen Hülsenschaft aufweist, welcher in der axialen Richtung des Blindnietelements auf der dem Setzkopf abgewandten Seite an das Stützelement angrenzt, wobei der Schaft des Blindnietelements innerhalb des Hülsenschafts angeordnet ist. Dabei ist insbesondere vorgesehen, dass der Schaft mit dem Hülsenschaft verbunden ist.

Die Ausbildung des Stützelements als separates Bauteil bzw. als Teilabschnitt eines separaten Bauteils, insbesondere einer Hülse, hat den Vorteil, dass aus einem konventionellen Blindnietelement, folglich einem Blindnietelement, das kein Stützelement aufweist, in einfacher Art und Weise ein Blindnietelement mit Stützelement gebildet werden kann. Zu diesem Zweck ist es lediglich notwendig, das Stützelement bzw. die Hülse von der dem Setzkopf abgewandten Seite des Schaftes aus auf den Schaft aufzubringen, bspw. aufzuschieben, aufzustecken oder aufzuschrauben, und das Stützelement bzw. die Hülse mit dem Schaft des Blindnietelements zu verbinden. Das Verbinden kann beispielsweise durch Schweißen, insbesondere durch mehrere Schweißpunkte, durch Crimpen, durch Clinchen, durch Kleben oder durch Verschrauben erfolgen. Es ist auch durchaus denkbar, dass das Verbinden zwischen dem Stützelement und dem Schaft erst durch den Verwender erfolgt. Dies hat den Vorteil, dass der Verwender erst bei Bedarf aus einem konventionellen Blindnietelement mittels Anbringen des separat vorliegenden Stützelements, insbesondere mittels Anbringen der separaten Hülse, ein erfindungsgemäßes Blindnietelement in einfacher Art und Weise bilden kann. Zudem können bei der Herstellung des erfindungsgemäßen Blindnietelements bereits vorhandene konventionelle Blindnietelemente bzw. Maschinen zur Herstellung konventioneller Blindnietelemente verwendet werden, wodurch Produktionskosten eingespart werden.

Hinsichtlich einer Schraubverbindung zwischen dem Stützelement und dem Schaft ist es durchaus denkbar, dass die das Stützelement aufweisende Hülse an einem dem Stützelement abgewandten Ende einen sich in Richtung des Stützelements erstreckenden Gewindebolzen aufweist, wobei dieser Gewindebolzen zwecks Bildung einer Verbindung zwischen der Hülse und dem Schaft des Blindnietelements von der dem Setzkopf abgewandten Seite aus in ein in dem Setzkopf abgewandten Ende ausgebildetes Innengewinde eingeschraubt ist. Bei dem Innengewinde kann es sich durchaus um das Innengewinde eines als Blindnietmutter ausgebildeten Blindnietelements handeln, welches dem Einschrauben einer Schraube oder dergleichen von der dem Setzkopf zugewandten Seite aus dient. Bei einer derartigen Ausführungsform der Hülse bzw. des Blindnietelements kann in besonders einfacher Art und Weise aus einem konventionellen Blindnietelement ein erfindungsgemäßes Blindnietelement gebildet werden.

Es ist auch durchaus denkbar, dass der Gewindebolzen des als Blindnietgewindebolzen ausgebildeten Blindnietelements durch einen in der Hülse ausgebildeten oder mit der Hülse verbundenen Gewindebolzen gebildet ist, insofern der Verbindungsabschnitt für den Gewindebolzen auch dem Verbinden der Hülse mit dem Schaft des Blindnietelements dient.

Hinsichtlich einer Verbindung des Schafts mit der Hülse ist in einer Ausführungsform des Blindnietelements vorgesehen, dass der Hülsenschaft auf einer dem Schaft des Blindnietelements zugewandten Seite eine umlaufende erste Nut und der Schaft des Blindnietelements auf einer dem Hülsenschaft zugewandten Seite eine an die erste Nut angrenzende, umlaufende zweite Nut aufweist, wobei in einer durch die erste Nut und die zweite Nut gebildeten Aufnahme ein Sicherungsring angeordnet ist, zur axialen Sicherung des Schafts in dem Hülsenschaft. Der Sicherungsring ist dabei vorzugsweise als Federring ausgebildet. Zwecks Montage des Blindnietelements ist es vorzugsweise lediglich notwendig, die vorgenannten Bauteile, nämlich Hülse, Schaft des Blindnietelements und Sicherungsring ineinander einzustecken.

Als besonders vorteilhaft wird es angesehen, wenn das Stützelement in der radialen Richtung gegenüber dem Hülsenschaft hervorsteht. Dementsprechend kann die Wandung des Hülsenschafts eine geringere Stärke aufweisen als das Stützelement, was sich vorteilhaft auf die Materialkosten und das Gewicht des Blindnietelements auswirkt.

In einer Weiterbildung des Blindnietelements ist vorgesehen, dass die radial hervorstehenden Teilbereiche des Stützelements oder das Stützelement als solches eine sich in der dem Setzkopf abgewandten axialen Richtung verjüngenden Querschnitt, insbesondere einen sich konisch verjüngenden Querschnitt aufweisen bzw. aufweist. Dadurch werden in der axialen Richtung in Richtung des dem Setzkopf abgewandten Endes des Blindnietelements auf das Stützelement einwirkende Kräfte in Richtung einer Längsachse des Blindnietelements abgeleitet, was sich vorteilhaft auf die Zugfestigkeit der Verbindung zwischen Blindnietelement und Bauteil und auf die Stabilität des Stützelements als solches auswirkt. Bei einer Ausführungsform des Blindnietelements mit einer Hülse mit Hülsenschaft werden bei der vorgenannten Gestaltung des Stützelements mit einem sich in der dem Setzkopf abgewandten axialen Richtung verjüngenden Querschnitt auf das Stützelement einwirkende Kräfte in den Hülsenschaft eingeleitet, was sich besonders vorteilhaft auf die Stabilität des Blindnietelements auswirkt.

In einer weiteren Ausführungsform des Blindnietelements weisen die radial hervorstehenden Teilbereiche des Stützelements oder das Stützelement als solches einen sich in der dem Setzkopf zugewandten axialen Richtung verjüngenden Querschnitt auf. Insbesondere ist vorgesehen, dass sich der Querschnitt konisch verjüngt. Dies hat den Vorteil, dass bei einem Anpressen bzw. Krafteinwirkung des Stützelements an bzw. in den Schließkopf die von dem Stützelement auf den Schließkopf übertragenen Kräfte nicht lediglich axial einwirken, sondern die auf den Schließkopf übertragenen Kräfte auch eine radiale Komponente aufweisen. Dies ist insbesondere dann von Vorteil, wenn der Schaft des Blindnietelements beabstandet zu einer das Setzloch begrenzenden Außenkante des Bauteils angeordnet ist. Bei einem Stützelement mit konstantem Querschnitt würde lediglich eine senkrecht zu der axialen Richtung ausgebildete Fläche des Stützelements von der dem Setzkopf abgewandten Seite aus auf den Schließkopf einwirken und das Bauteil von der dem Setzkopf zugewandten Seite des Schließkopfes in die entgegengesetzte Richtung axial auf den Schließkopf einwirken. Insbesondere beim Setzen des Blindnietelements, folglich beim Verformen des Verformungsabschnitts, würden bei einer derartigen Gestaltung des Stützelements Scherkräfte am Schließkopf auftreten, die zu einer Beschädigung oder gar einer Zerstörung des Schließkopfes führen könnten. Hingegen wird bei einer Gestaltung des Stützelements bzw. der radial hervorstehenden Teilbereiche des Stützelements mit einem sich in der dem Setzkopf zugewandten axialen Richtung verjüngenden Querschnitt Scherkräfte am Schließkopf vermieden, da das Stützelement eine Oberfläche aufweist, die zumindest teilweise quer ausgerichtet ist und entsprechend die von dieser Oberfläche auf den Schließkopf übertragenen Kräfte auch nach radial außen wirken, wodurch Scherkräfte am Schließkopf vermieden werden. Zudem werden durch eine derartige Gestaltung Linienberührungen zwischen dem Schließkopf und der das Setzloch umschließenden Außenkante vermieden.

In einer Ausführungsform der Hülse weist der Hülsenschaft an seinem dem Setzkopf abgewandten Ende eine offene Bodenfläche auf. Die offene Bodenfläche ermöglicht es, dass eine in das Blindnietelement eingeschraubte Schraube, ein Gewindebolzen oder dergleichen die Bodenfläche des Hülsenschaftes durchsetzen kann. Zudem ist ein Einschrauben einer Schraube oder dergleichen von beiden Seiten des Blindnietelements aus möglich.

In einer anderen Ausführungsform ist vorgesehen, dass der Hülsenschaft eine geschlossene Bodenfläche aufweist. Ein Blindnietelement mit einer derart gestalteten Hülse eignet sich dazu, das Setzloch des Bauteils zu verschließen.

In einer vorteilhaften Weiterbildung weisen die radial hervorstehenden Teilbereiche des Stützelements oder das Stützelement als solches auf einer dem Setzkopf zugewandten Seite eine Strukturierung auf. Bei der Strukturierung kann es sich beispielsweise um eine Zahnung oder eine Riffelung handeln. Bei einer derartigen Ausführungsform des Blindnietelements wird ein Verdrehen des Stützelements bezüglich des Schließkopfes und/oder ein Verdrehen des Blindnietelements als solches vermieden.

In einer bevorzugten Ausführungsform ist vorgesehen, dass das Stützelement auf der dem Setzkopf zugewandten Seite in der axialen Richtung hervorstehende, tangential beabstandete Vorsprünge aufweist, wobei der nach dem Verformen gebildete Schließkopf mehrere tangential beabstandete, sich in der radialen Richtung erstreckende Schließkopfabschnitte aufweist, wobei der jeweilige Vorsprung zwischen zweien der Schließkopfabschnitte angeordnet ist. Dabei ist es durchaus denkbar, dass sich die Vorsprünge bis in den Bereich des Setzlochs erstrecken. In einer derartigen Ausführungsform des Blindnietelements ist ein Verdrehen des Stützelements, insbesondere ein Verdrehen der das Stützelement aufweisenden Hülse, bezüglich des Schließkopfes des Blindnietelements verhindert.

In diesem Zusammenhang wird es als besonders vorteilhaft angesehen, wenn der jeweilige Vorsprung mit einer der in der axialen Richtung verlaufenden Schwächungsstellen in der axialen Richtung fluchtet. Dadurch wird sichergestellt, dass nach dem Verformen des Blindnietelements die Vorsprünge in Bereichen zwischen den Schließkopfabschnitten angeordnet sind.

Das Blindnietelement und/oder die Hülse ist insbesondere symmetrisch zu einer Längsachse des Blindnietelements ausgebildet. Vorzugsweise ist das Blindnietelement und/oder die Hülse rotationssymmetrisch oder radiärsymmetrisch zu dieser Längsachse ausgebildet.

Das erfindungsgemäße Blindnietelement findet insbesondere Verwendung zum lagegenauen Vernieten mit einem Bauteil, insbesondere zwecks Toleranzausgleichs. Zu diesem Zweck ist vorgesehen, dass ein in einem Setzloch des Bauteils angeordneter Abschnitt des Schafts eine radiale Abmessung aufweist, die geringer ist als eine radiale Abmessung des Setzlochs. Aufgrund der geringeren radialen Abmessung des in dem Setzloch angeordneten Abschnitts des Schafts kann das Blindnietelement in einer bezüglich der axialen Richtung des Blindnietelements senkrechten Ebene in unterschiedlichen Positionen innerhalb des Setzlochs angeordnet werden. Dadurch sind eine lagegenaue Ausrichtung des Blindnietelements und somit insbesondere ein Toleranzausgleich mittels des Blindnietelements möglich.

In einer bevorzugten Ausführungsform ist vorgesehen, dass der in dem Setzloch angeordnete Abschnitt des Schafts einen Außendurchmesser aufweist, der geringer ist als ein Durchmesser des Setzlochs.

Bei dem mit dem Blindnietelement zu verbindenden Bauteil kann es sich insbesondere um ein Bauteil aus Metall, Holz, Kunststoff oder einem Verbundwerkstoff handeln. Das zu verbindende Bauteil kann insbesondere aus einem weichen Material bestehen oder ein weiches Material aufweisen.

In den Figuren ist die Erfindung anhand mehrerer Ausführungsformen dargestellt, ohne hierauf beschränkt zu sein.

Es zeigt:
- Fig. 1: eine erste Ausführungsform des Blindnietelements, das als Blindnietmutter ausgebildet ist, in einer Schnittansicht gemäß der Linie I-I in Fig. 2,
- Fig. 2: das Blindnietelement in einer Ansicht gemäß dem Pfeil II in Fig. 1,
- Fig. 3: das Blindnietelement gemäß Fig. 1 in einer perspektivischen Ansicht,
- Fig. 4: eine zweite Ausführungsform des Blindnietelements, das als Blindnietmutter ausgebildet ist, in einer teilweise geschnittenen Ansaicht gemäß der Linie IV-IV in Fig. 5,
- Fig. 5: das Blindnietelement in einer Ansicht gemäß dem Pfeil V in Fig. 4,
- Fig. 6: das Blindnietelement gemäß Fig. 4 in einer perspektivischen Ansicht,
- Fig. 7: eine Anordnung des Blindnietelements gemäß Fig. 4 und eines Bauteils nach dem Setzen der Blindnietmutter in einer Schnittansicht gemäß der Linie VII-VII in Fig. 8,
- Fig. 8: die Anordnung in einer Ansicht gemäß dem Pfeil VIII in Fig. 7,
- Fig. 9: die Anordnung gemäß Fig. 7 in einer ersten perspektivischen Darstellung,
- Fig. 10: die Anordnung gemäß Fig. 7 in einer zweiten perspektivischen Ansicht,
- Fig. 11: ein Stützelement des Blindnietelements gemäß Fig. 4 in einer Ansicht gemäß dem Pfeil XI in Fig. 12,
- Fig. 12: das Stützelement in einer Schnittansicht gemäß der Linie XII-XII in Fig. 11,
- Fig. 13: eine dritte Ausführungsform des Blindnietelements, das als Blindnietmutter ausgebildet ist, in einer Schnittansicht wie in Fig. 1,
- Fig. 14: das Blindnietelement gemäß Fig. 13 in einer perspektivischen Darstellung,
- Fig. 15: eine Hülse des Blindnietelements gemäß Fig. 13 in einer Schnittansicht gemäß der Linie XV-XV in Fig. 16,
- Fig. 16: die Hülse in einer Ansicht gemäß dem Pfeil XVI in Fig. 15,
- Fig. 17: eine anderen Ausführungsform der Hülse in einer Ansicht gemäß dem Pfeil XVII in Fig. 18,
- Fig. 18: die Hülse in einer Schnittansicht gemäß der Linie XVIII-XVIII in Fig. 17,
- Fig. 19: eine vierte Ausführungsform des erfindungsgemäßen Blindnietelements, das als Blindnietmutter ausgebildet ist, in einer Schnittansicht wie in Fig. 1,
- Fig. 20: eine fünfte Ausführungsform des erfindungsgemäßen Blindnietelements, das als Blindnietmutter ausgebildet ist, in einer Schnittansicht wie in Fig. 1,
- Fig. 21: die Hülse des Blindnietelements gemäß Fig. 20 in einer Schnittansicht,
- Fig. 22: das Blindnietelement gemäß Fig. 20 in einer Explosionsdarstellung,
- Fig. 23: eine sechste Ausführungsform des erfindungsgemäßen Blindnietelements, das als Blindnietmutter ausgebildet ist, in einer Schnittansicht wie in Fig. 1,
- Fig. 24: eine weitere Ausführungsform der Hülse in einer Schnittansicht,
- Fig. 25: eine perspektivische Darstellung der Hülse gemäß Fig. 24,
- Fig. 26: eine siebte Ausführungsform des erfindungsgemäßen Blindnietelements, das als Blindnietgewindebolzen ausgebildet ist, in einer Schnittansicht wie in Fig. 1,
- Fig. 27: eine weitere Ausführungsform der Hülse in einer Schnittansicht,
- Fig. 28: eine weitere Ausführungsform der Hülse in einer Schnittansicht,
- Fig. 29: Anordnung einer achten Ausführungsform des erfindungsgemäßen Blindnietelements, das als Blindnietmutter ausgebildet ist, und eines Bauteils in einer Schnittansicht wie in Fig. 7,
- Fig. 30: eine Anordnung des Blindnietelements gemäß Fig. 1 und eines Bauteils vordem Einführen des Blindnietelements in das Bauteil in einer Schnittansicht wie in Fig. 1,
- Fig. 31: die Anordnung gemäß Fig. 30, wobei die Blindnietmutter in ein Setzloch des Bauteils eingesetzt ist, in einer ersten Stellung der Blindnietmutter in dem Setzloch in einer Schnittansicht,
- Fig. 32: die Anordnung gemäß Fig. 31 in einer zweiten Stellung der Blindnietmutter in dem Setzloch in einer Schnittansicht.

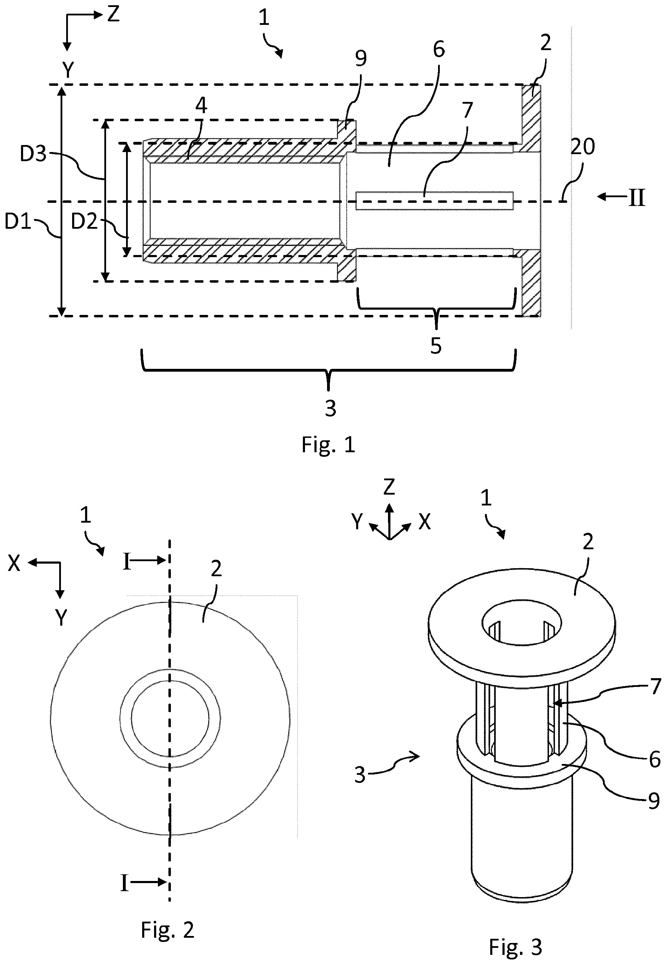

Die Fig. 1 bis 3 veranschaulichen eine erste Ausführungsform des erfindungsgemäßen Blindnietelements 1. Vorliegend ist das Blindnietelement 1 als Blindnietmutter ausgebildet. Das Blindnietelement weist einen Setzkopf 2 und einen in einer axialen Richtung Z des Blindnietelements 1 an den Setzkopf 2 angrenzenden Schaft 3 auf. Der Schaft 3 weist im Bereich seines dem Setzkopf 2 abgewandten Endes ein Innengewinde 4 auf. Wird dieses Blindnietelement 1 in einem Bauteil 16 befestigt, stellt dieses Blindnietelement 1 nach seiner Befestigung ein Innengewinde 4 für eine Schraubverbindung zur Verfügung.

Das Setzen der Blindnietmutter 1 kann dadurch erfolgen, dass die Blindnietmutter 1 zunächst in einem in das Bauteil 16 eingebrachten Setzloch 17 platziert wird und dann mit einem geeigneten Werkzeug, welches einen rotierbaren und axial verschiebbaren Gewindedorn aufweist, vernietet wird. Hierzu wird der Gewindedorn von der Setzkopfseite her in das Innengewinde 4 der Blindnietmutter 1 geschraubt und dann axial so verschoben, dass eine Stauchung eines zwischen dem Innengewinde 4 und dem Setzkopf 2 ausgebildeten Verformungsabschnitts 5 erfolgt. Beim Verformen des Verformungsabschnitts 5 kommt es zur Ausbildung eines Schließkopfes 8 auf der dem Setzkopf 2 abgewandten Seite des Bauteils 16. Der Schließkopf 8 verankert zusammen mit dem Setzkopf 2 das Blindnietelement 1 in dem Bauteil 16. Im Anschluss an die Verformung des Verformungsabschnitts 5 wird der Gewindedorn ausgeschraubt. Das Innengewinde 4 des Blindnietelements 1 steht dann als Aufnahme für eine Befestigungsschraube zur Verfügung.

Der Setzkopf 2 weist einen größeren Außendurchmesser D1 als der Schaft auf. Die Wandung 6 des Schafts 3 weist im Bereich des Verformungsabschnitts 5 eine Schwächung auf, die vorliegend durch vier als die Wandung durchsetzende Schlitze ausgebildete Schwächungsstellen 7 gebildet ist. Die Schwächungsstellen 7 sind dabei identisch ausgebildet und verlaufen in der axialen Richtung Z des Blindnietelements 1.

Das Blindnietelement 1 weist ein Stützelement 9 auf, wobei der Verformungsabschnitt 5 in der axialen Richtung Z des Blindnietelements 1 zwischen dem Setzkopf 2 und dem Stützelement 9 ausgebildet ist. Vorliegend ist das Stützelement 9 kreisringförmig ausgebildet und durch einen Teilabschnitt des Schafts 3 gebildet. Das Stützelement 9 steht in einer radialen Richtung X, Y gegenüber dem Verformungsabschnitt 5 hervor.

Das Blindnietelement 1 ist vorliegend einteilig ausgebildet.

Der Außendurchmesser D1 des Setzkopfes 2 ist größer als ein Außendurchmesser D3 des Stützelements 9, wobei der Außendurchmesser D3 des Stützelements 9 wiederum größer ist als ein Außendurchmesser D2 des Verformungsabschnitts 5.

Das Blindnietelement 1 ist vierfach radiärsymmetrisch zu einer Längsachse 20 des Blindnietelements 1 ausgebildet.

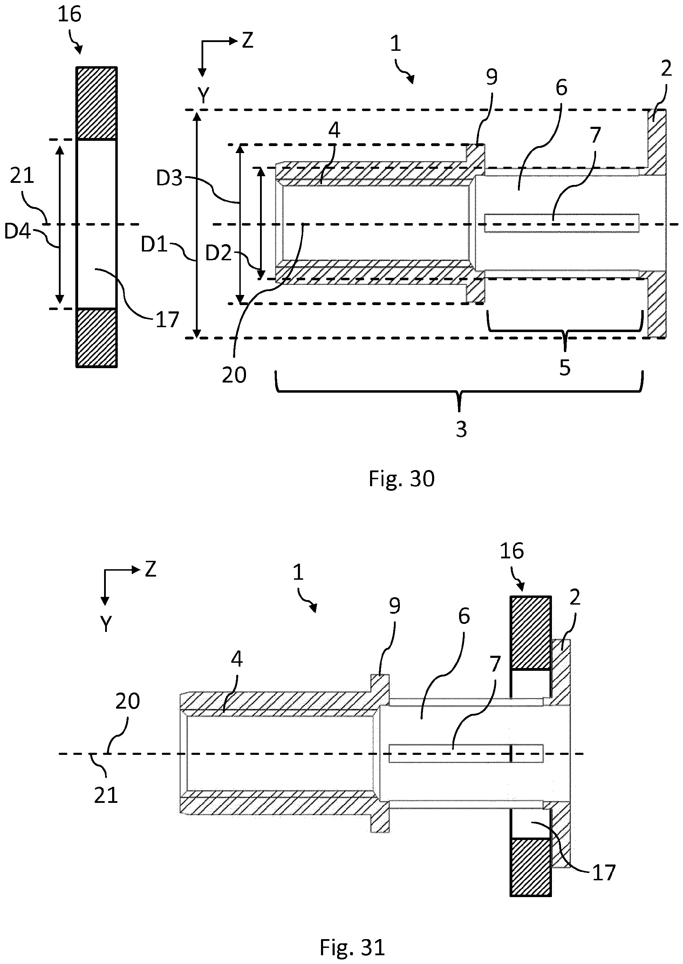

Das Blindnietelement 1 findet insbesondere Verwendung zum lagegenauen Vernieten mit dem Bauteil 16, insbesondere zwecks Toleranzausgleichs. Dies ist in den Fig. 30 bis 32 veranschaulicht. Das Blindnietelement 1 ist derart gestaltet, dass ein in dem Setzloch 17 des Bauteils 16 angeordneter bzw. anzuordnender Abschnitt des Schafts 3 eine radiale Abmessung aufweist, die geringer ist als eine radiale Abmessung des Setzlochs 17. Vorliegend ist der in dem Setzloch 17 angeordnete Abschnitt des Schafts 3 derart gestaltet, dass dessen Außendurchmesser identisch ist mit dem Außendurchmesser D2 des Verformungsabschnitts 5. Dieser Außendurchmesser D2 ist geringer als ein Durchmesser D4 des Setzlochs 17. Der Durchmesser D4 des Setzlochs 17 ist wiederum geringfügig größer als der Außendurchmesser D2 des Stützelements 9, um ein Einstecken des Schafts 3 des Blindnietelements 1 in das Setzloch 17 des Bauteils 16 zu ermöglichen.

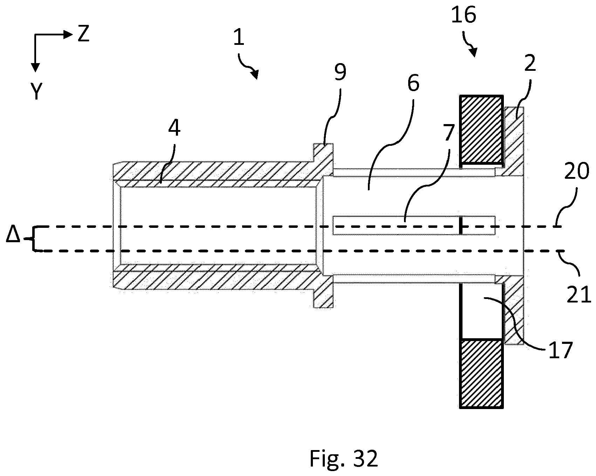

Aufgrund dieser Gestaltung des Blindnietelements 1 ist es möglich, das Blindnietelement 1 in unterschiedlichen Lagen in dem Setzloch 17 zu positionieren und zu befestigen, beispielsweise um Fertigungstoleranzen auszugleichen. Die Fig. 31 und 32 zeigen das Blindnietelement 1 in zwei unterschiedlichen Stellungen bzw. Lagen in dem Setzloch 17. In einer in der Fig. 31 dargestellten ersten Stellung ist das Blindnietelement 1 derart in dem Bauteil 16 angeordnet, dass die Längsachse 20 konzentrisch zu einer Symmetrieachse 21 des Setzlochs 17 angeordnet ist. In einer in der Fig. 32 dargestellten zweiten Stellung ist das Blindnietelement 1 derart angeordnet, dass die Längsachse 20 parallel versetzt zu der Achse 21 des Setzlochs 17 ist. Somit ist die Längsachse 20 des Blindnietelements 1 in einem Abstand Δ zu der Achse 21 des Setzlochs 17 in dem Setzloch 17 angeordnet.

Nach dem Verformen des Blindnietelements 1 hintergreift das Stützelement 9 den aus dem Verformungsabschnitt 5 gebildeten Schließkopf 8 auf einer dem Setzkopf 2 abgewandten Seite. Dadurch wird vermieden, dass bei einem Verformen des Blindnietelements 1 oder beim Einwirken einer Zugkraft auf das bereits verformte Blindnietelement 1 der Schließkopf 8 oder Schließkopfabschnitte 15 des Schließkopfes 8 in Richtung des dem Setzkopf 2 abgewandten Endes des Schafts 3 umgebogen werden.

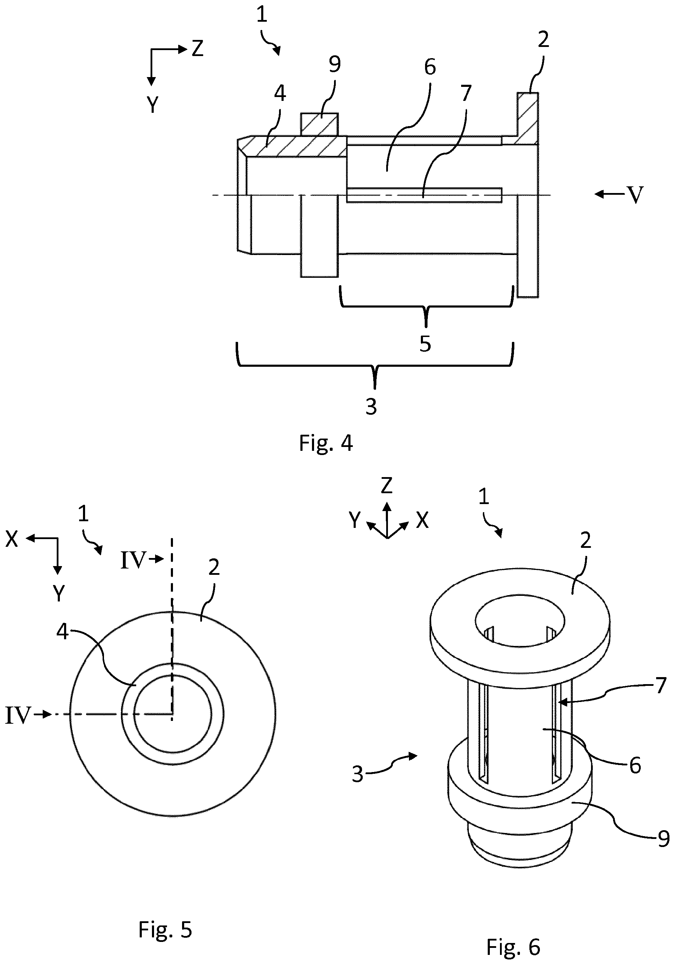

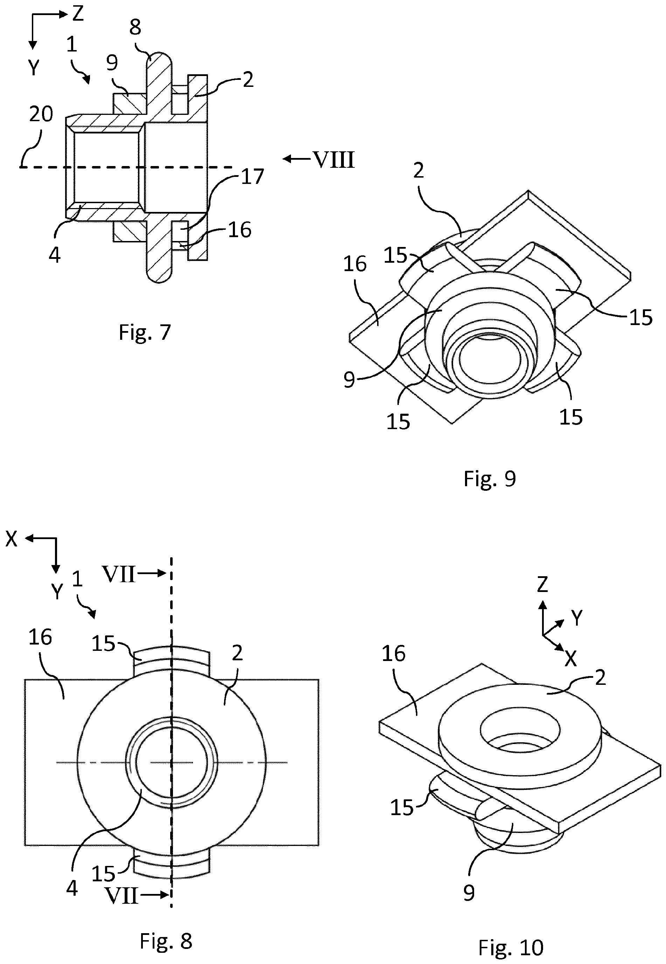

Der verformte Zustand des Blindnietelements 1 ist für ein zweites Ausführungsbeispiel des Blindnietelements 1, welches in den Fig. 4 bis 10 dargestellt ist, in der Fig. 7 veranschaulicht. Wie der Fig. 7 zu entnehmen ist, kontaktiert das Stützelement 9 den gebildeten Schließkopf 8 auf einer dem Setzkopf 2 abgewandten Seite. Vorzugsweise presst das Stützelement 9 den gebildeten Schließkopf 8 an das Bauteil 16 an.

Das in den Fig. 4 bis 10 dargestellte zweite Ausführungsbeispiel des Blindnietelements 1 unterscheidet sich von dem ersten Ausführungsbeispiel im Wesentlichen dadurch, dass das Stützelement 9 durch ein separates Bauteil gebildet ist, wobei das Bauteil vorliegend als kreisringförmige Hülse 10 ausgebildet ist. Der Schaft 3 des Blindnietelements 1 ist dabei innerhalb der Hülse 10 angeordnet. Vorliegend durchsetzt der Schaft 3 die Hülse 10, und die Hülse 10 und der Schaft 3 sind miteinander verbunden. Die Verbindung zwischen der Hülse 10 und dem Schaft 3 erfolgt vorzugsweise mittels Schweißen, insbesondere mittels Punktschweißen. Es sind aber auch andere Verbindungen denkbar, wie beispielsweise eine Schraubverbindung, eine Klebeverbindung, oder eine Crimpverbindung.

Die zweite Ausführungsform des Blindnietelements 1 weist ebenfalls vier schlitzförmige Schwächungsstellen 7 auf, wobei beim Verformen des Verformungsabschnitts 5 aufgrund dieser Schwächungsstellen 7 vier tangential beabstandete, sich in der radialen Richtung X, Y erstreckende, identische Schließkopfabschnitte 15 ausbilden, sodass der Schließkopf 8 rosettenartig ausgebildet ist.

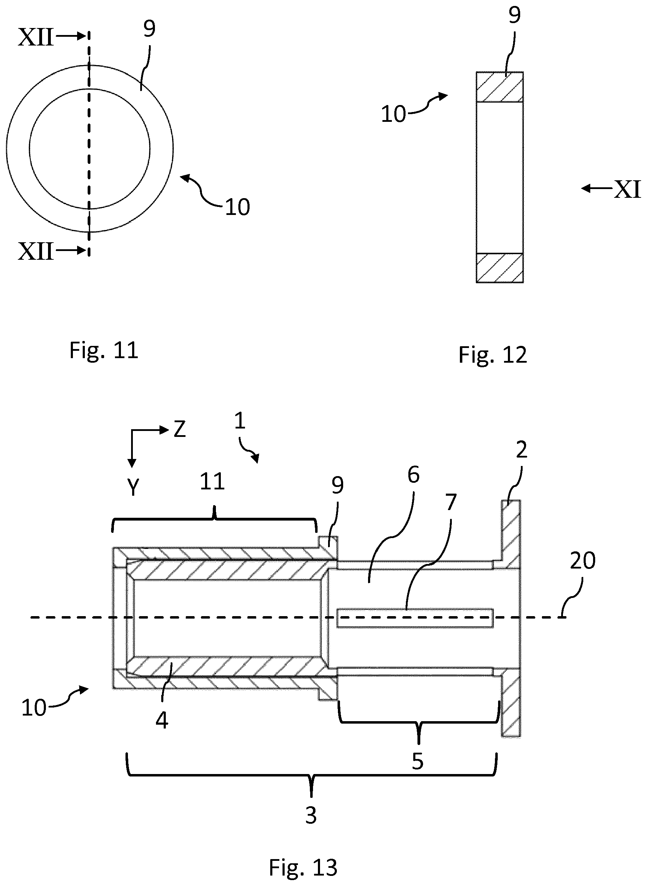

In den Fig. 11 und 12 ist das als Hülse 10 ausgebildete Stützelement 9 des zweiten Ausführungsbeispiels des Blindnietelements 1 separat dargestellt.

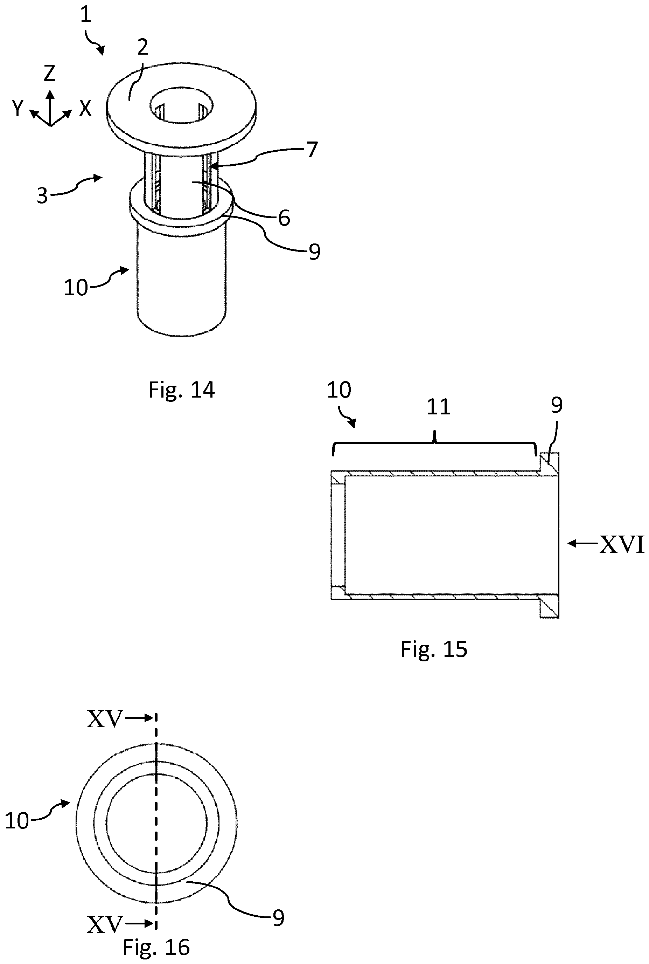

Das in den Fig. 13 und 14 dargestellte dritte Ausführungsbeispiel unterscheidet sich von dem ersten Ausführungsbeispiel im Wesentlichen dadurch, dass das Blindnietelement 1 wiederum eine Hülse 10 aufweist, wobei, im Unterschied zu dem zweiten Ausführungsbeispiel, die Hülse 10 einen Hülsenschaft 11 aufweist, welcher in der axialen Richtung Z des Blindnietelements 1 auf der dem Setzkopf 2 abgewandten Seite an das Stützelement 9, welches durch einen Teilabschnitt der Hülse 10 gebildet ist, angrenzt. Der Schaft 3 des Blindnietelements 1 ist innerhalb des Hülsenschafts 11 angeordnet und mit dem Hülsenschaft 11 verbunden ist.

Vorliegend weisen sowohl der Schaft 3 des Blindnietelements 1 als auch die Hülse 10 jeweils an ihrem dem Setzkopf 2 abgewandten Ende eine Durchgangsöffnung auf. Dies ermöglicht es, dass eine in das Blindnietelement 1 eingeschraubte Schraube oder dergleichen sowohl den Schaft 3 als auch die Hülse 10 vollständig durchsetzen. Die Hülse 10 als solche ist in den Fig. 15 und 16 dargestellt.

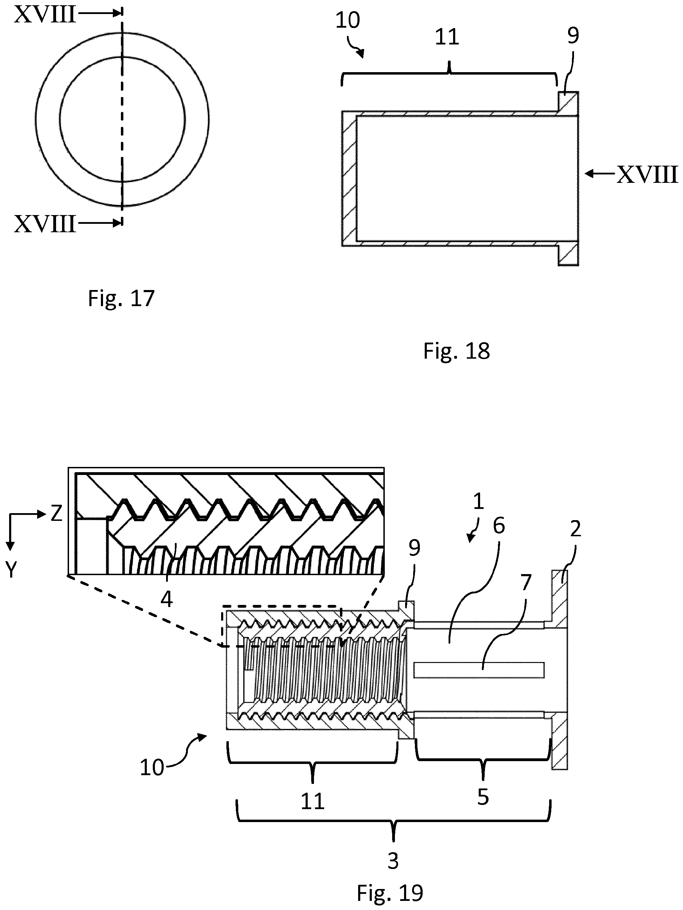

Die Fig. 17 und 18 zeigen eine andere Ausführungsform der Hülse 10, wobei sich diese Ausführungsform von der Hülse 10 des dritten Ausführungsbeispiels des Blindnietelements 1 im Wesentlichen dadurch unterscheidet, dass die Hülse 10 auf ihrer dem Setzkopf 2 abgewandten Seite eine geschlossene Bodenfläche aufweist.

Bei der in der Fig. 19 dargestellten vierten Ausführungsform des Blindnietelements 1 ist die Verbindung zwischen der Hülse 10 und dem Schaft 3 dadurch gebildet, dass der Schaft 3 an seinem dem Setzkopf 2 abgewandten Ende ein Außengewinde und die Hülse 10 ein zu dem Außengewinde des Schafts 3 korrespondierendes Innengewinde aufweist und die Hülse 10 mit dem Schaft 3 verschraubt ist.

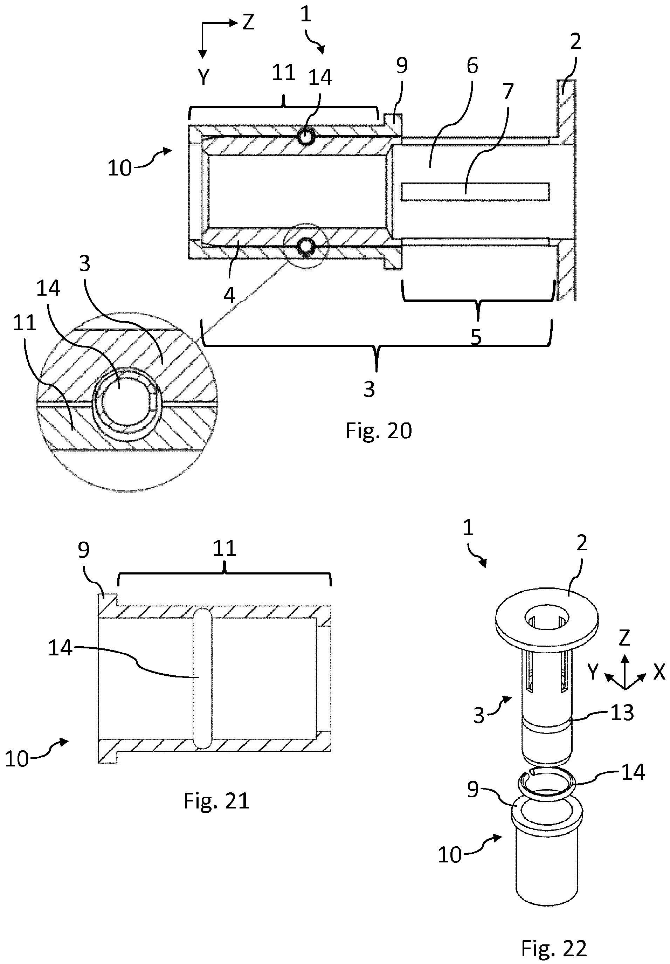

Eine weitere mögliche Verbindung zwischen der Hülse 10 und dem Schaft 3 des Blindnietelements 1 ist in der in den Fig. 20 bis 22 gezeigten fünften Ausführungsform des Blindnietelements 1 veranschaulicht. Die Verbindung zwischen dem Schaft 3 des Blindnietelements 1 und der Hülse 10 ist dabei dadurch gebildet, dass der Schaft 3 in dem Hülsenschaft 11 der Hülse 10 angeordnet ist, wobei der Hülsenschaft 11 auf einer dem Schaft 3 des Blindnietelements 1 zugewandten Seite eine umlaufende erste Nut 12 und der Schaft 3 des Blindnietelements 1 auf einer dem Hülsenschaft 11 zugewandten Seite eine an die erste Nut 12 angrenzende, umlaufende zweite Nut 13 aufweist, wobei in einer durch die erste Nut 12 und die zweite Nut 13 gebildeten Aufnahme ein Sicherungsring 14, vorliegend ein Federring, angeordnet ist, zur axialen Sicherung des Schafts 3 in dem Hülsenschaft 11.

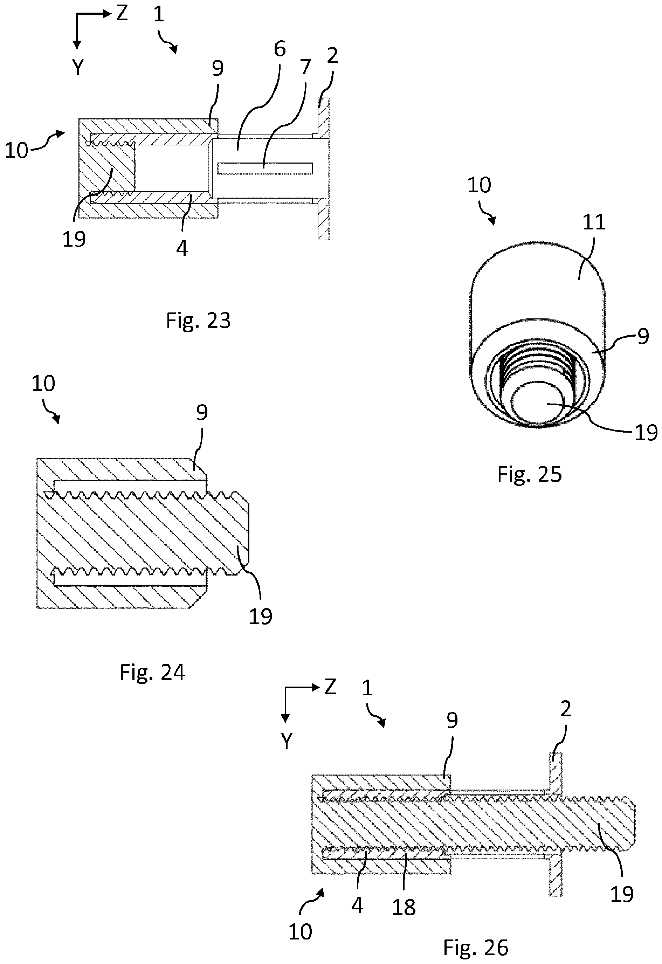

Es ist aber auch denkbar, dass die Hülse 10 einen Gewindebolzen 19 aufweist, der innerhalb des Hülsenschafts 11 angeordnet und mit dem Hülsenschaft 11 an einem dem Setzkopf 2 abgewandten Ende verbunden ist. Zwecks Herstellen einer Verbindung zwischen der Hülse 10 und dem Schaft 3 des Blindnietelements 1 kann die Hülse 10 mittels des Gewindebolzens 19 von der dem Setzkopf 2 abgewandten Seite des Schafts 3 aus in das Innengewinde 4 des Schafts 3 eingeschraubt werden. Eine derartige Ausführungsform des Blindnietelements 1 ist in der Fig. 23 dargestellt. In dieser Ausführungsform belegt der Gewindebolzen 19 nur einen Teilbereich des Innengewindes 4, sodass das Innengewinde 4 nach dem Setzen des Blindnietelements 1 zum Einschrauben einer Schraube oder dergleichen zur Verfügung steht, insofern das in der Fig. 23 dargestellte Blindnietelement 1 als Blindnietmutter verwendet werden kann.

Die Fig. 24 und 25 zeigen ein weiteres Ausführungsbeispiel der Hülse 10 mit Gewindebolzen 19.

Die Fig. 26 zeigt eine siebte Ausführungsform des Blindnietelements 1, wobei dieses Blindnietelement 1 als Blindnietgewindebolzen ausgebildet ist. Dabei ist der Gewindebolzen 19 des Blindnietgewindebolzens 1 in der Hülse 10 ausgebildet, wobei der Gewindebolzen 19 von der dem Setzkopf 2 abgewandten Seite des Schafts 3 aus in das Innengewinde 4 des Schafts 3 eingeschraubt ist, insofern das Innengewinde 4 des Schafts 3 vorliegend einen Verbindungsabschnitt 18 für den Gewindebolzen 19 bildet. Der Gewindebolzen 19 durchsetzt den Schaft 3 und den Setzkopf 2 vollständig, wobei ein Teilbereich des Gewindebolzens 19 auf einer dem Schaft 3 abgewandten Seite des Setzkopfes 2 aus gegenüber dem Setzkopf 2 hervorsteht.

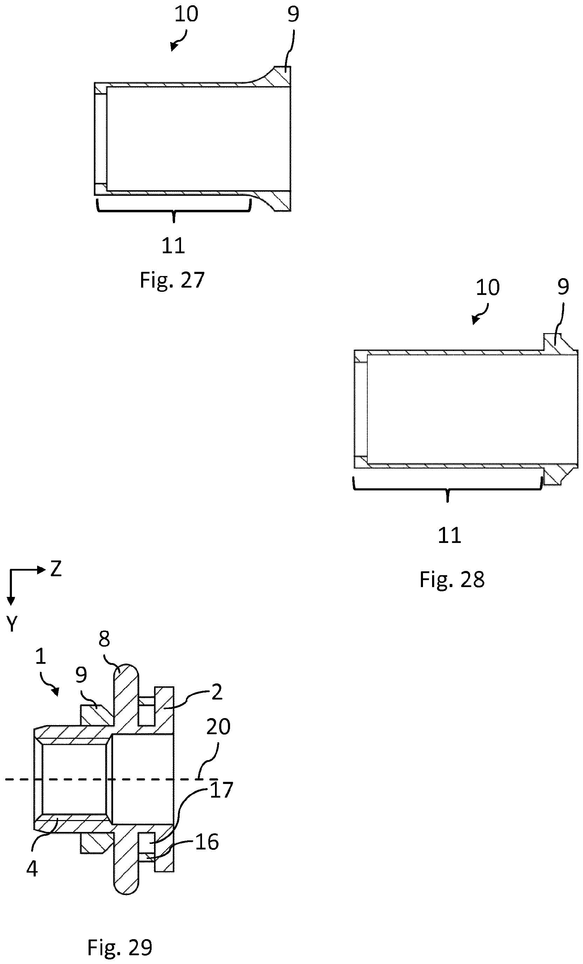

Die Fig. 27 zeigt eine weitere Ausführungsform der Hülse 10, wobei das Stützelement 9, welches durch einen Teilabschnitt der Hülse 10 gebildet ist, einen sich in der dem Setzkopf 2 abgewandten axialen Richtung Z, folglich in Richtung des Hülsenschafts 11, verjüngenden Querschnitt aufweist.

Das in der Fig. 28 dargestellte Ausführungsbeispiel der Hülse 10 weist ein Stützelement 9 auf, welches einen sich in der dem Setzkopf 2 zugewandten axialen Richtung Z verjüngenden Querschnitt, vorliegend einen sich konisch verjüngenden Querschnitt, aufweist. Die Wirkung einer derartigen Verjüngung des Querschnitts des Stützelements 9 ist in der Fig. 29 dargestellt. Eine derartige Gestaltung des Stützelements 9 verhindert das Auftreten von Scherkräften im Bereich des Schließkopfes 8 oder reduziert zumindest die Stärke derartiger Scherkräfte. Aufgrund der Gestaltung des Stützelements 9 mit einem sich in Richtung des Setzkopfes 2 verjüngenden Querschnitts werden von dem Stützelement 9 auf den Schließkopf 8 übertragene Kräfte mit einer Komponente nach radial außen in den Schließkopf 8 eingeleitet.

### Bezugszeichenliste

- 1: Blindnietelement
- 2: Setzkopf
- 3: Schaft
- 4: Innengewinde
- 5: Verformungsabschnitt
- 6: Wandung
- 7: Schwächungsstelle
- 8: Schließkopf
- 9: Stützelement
- 10: Hülse
- 11: Hülsenschaft
- 12: erste Nut
- 13: zweite Nut
- 14: Sicherungsring
- 15: Schließkopfabschnitt
- 16: Bauteil
- 17: Setzloch
- 18: Verbindungsabschnitt
- 19: Gewindebolzen
- 20: Längsachse
- 21: Achse

- D1: Durchmesser des Setzkopfes
- D2: Durchmesser des Verformungsabschnitts
- D3: Durchmesser des Stützelements
- D4: Durchmesser des Setzlochs

- X: radiale Richtung
- Y: andere radiale Richtung
- Z: axiale Richtung
- Δ: Abstand

## Patentansprüche

1. Blindnietelement (1) mit einem Setzkopf (2) und einem in einer axialen Richtung (Z) des Blindnietelements (1) an den Setzkopf (2) angrenzenden Schaft (3), wobei der Schaft (3) im Bereich seines dem Setzkopf (2) abgewandten Endes ein Innengewinde (4) oder einen Verbindungsabschnitt (18) für einen Gewindebolzen (19) und zwischen dem Innengewinde (4) bzw. dem Verbindungsabschnitt (18) für den Gewindebolzen (19) und dem Setzkopf (2) einen Verformungsabschnitt (5) aufweist, wobei der Setzkopf (2) einen größeren Außendurchmesser (D1) als der Schaft (3) aufweist, wobei eine Wandung (6) des Schafts (3) im Bereich des Verformungsabschnitts (5) eine Schwächung aufweist, zur Ausbildung eines Schließkopfes (8) nach einem Verformen des Blindnietelements (1),
**dadurch gekennzeichnet, dass**
das Blindnietelement (1) ein Stützelement (9) aufweist, wobei der Verformungsabschnitt (5) in der axialen Richtung (Z) des Blindnietelements (1) zwischen dem Setzkopf (2) und dem Stützelement (9) ausgebildet ist, wobei zumindest Teilbereiche des Stützelements (9) in einer radialen Richtung (X, Y) gegenüber dem Verformungsabschnitt (5) hervorstehen.

2. Blindnietelement (1) nach Anspruch 1, **dadurch gekennzeichnet, dass** die radial hervorstehenden Teilbereiche des Stützelements (9) nach dem Verformen des Blindnietelements (1) den aus dem Verformungsabschnitt (5) gebildeten Schließkopf (8) auf einer dem Setzkopf (2) abgewandten Seite hintergreifen, insbesondere die radial hervorstehenden Teilbereiche des Stützelements (9) den gebildeten Schließkopf (8) auf der dem Setzkopf (2) abgewandten Seite kontaktieren.

3. Blindnietelement (1) nach Anspruch 1 oder 2, **dadurch gekennzeichnet, dass** die Wandung (6) des Verformungsabschnitts (5) mehrere in der axialen Richtung (Z) verlaufende Schwächungsstellen (7), insbesondere identisch ausgebildete Schwächungsstellen (7) aufweist.

4. Blindnietelement (1) nach Anspruch 3, **dadurch gekennzeichnet, dass** die Schwächungsstellen (7) als die Wandung (6) durchsetzende Schlitze ausgebildet sind.

5. Blindnietelement (1) nach einem der Ansprüche 1 bis 4, **dadurch gekennzeichnet, dass** das Stützelement (9) durch einen Teilabschnitt des Schafts (3) gebildet ist.

6. Blindnietelement (1) nach einem der Ansprüche 1 bis 4, **dadurch gekennzeichnet, dass** das Blindnietelement (1) eine Hülse (10) aufweist, wobei der Schaft (3) innerhalb der Hülse (10) angeordnet und mit der Hülse (10) verbunden ist, wobei die Hülse (10) das Stützelement (9) aufweist, insbesondere ein Teilabschnitt der Hülse (10) das Stützelement (9) bildet.

7. Blindnietelement (1) nach Anspruch 6, **dadurch gekennzeichnet, dass** die Hülse (10) einen Hülsenschaft (11) aufweist, welcher in der axialen Richtung (Z) des Blindnietelements (1) auf der dem Setzkopf (2) abgewandten Seite an das Stützelement (9) angrenzt, wobei der Schaft (3) des Blindnietelements (1) innerhalb des Hülsenschafts (11) angeordnet ist, insbesondere der Schaft (3) mit dem Hülsenschaft (11) verbunden ist.

8. Blindnietelement (1) nach Anspruch 7, **dadurch gekennzeichnet, dass** das der Hülsenschaft (11) auf einer dem Schaft (3) des Blindnietelements (1) zugewandten Seite eine umlaufende erste Nut (12) und der Schaft (3) des Blindnietelements (1) auf einer dem Hülsenschaft (11) zugewandten Seite eine an die erste Nut (12) angrenzende, umlaufende zweite Nut (13) aufweist, wobei in einer durch die erste Nut (12) und die zweite Nut (13) gebildeten Aufnahme einer Sicherungsring (14) angeordnet ist, zur axialen Sicherung des Schafts (3) in dem Hülsenschaft (11).

9. Blindnietelement nach Anspruch 7 oder 8, **dadurch gekennzeichnet, dass** das Stützelement (9) in der radialen Richtung (X, Y) gegenüber dem Hülsenschaft (11) hervorsteht.

10. Blindnietelement (1) nach einem der Ansprüche 1 bis 9, **dadurch gekennzeichnet, dass** die radial hervorstehenden Teilbereiche des Stützelements (9) einen sich in der dem Setzkopf (2) abgewandten axialen Richtung (Z) verjüngenden Querschnitt, insbesondere einen sich konisch verjüngenden Querschnitt aufweisen.

11. Blindnietelement (1) nach einem der Ansprüche 1 bis 10, **dadurch gekennzeichnet, dass** die radial hervorstehenden Teilbereiche des Stützelements (9) einen sich in der dem Setzkopf (2) zugewandten axialen Richtung (Z) verjüngenden Querschnitt, insbesondere einen sich konisch verjüngenden Querschnitt aufweisen.

12. Blindnietelement (1) nach einem der Ansprüche 1 bis 11, **dadurch gekennzeichnet, dass** das radial hervorstehenden Teilbereiche des Stützelements (9) auf einer dem Setzkopf (2) zugewandten Seite eine Strukturierung aufweisen.

13. Blindnietelement (1) nach einem der Ansprüche 1 bis 12, **dadurch gekennzeichnet, dass** das Stützelement (9) auf der dem Setzkopf (2) zugewandten Seite in der axialen Richtung (Z) hervorstehende, tangential beabstandete Vorsprünge aufweist, wobei der nach dem Verformen gebildete Schließkopf (8) mehrere tangential beabstandete, sich in der radialen Richtung (X, Y) erstreckende Schließkopfabschnitte (15) aufweist, wobei der jeweilige Vorsprung zwischen zweien der Schließkopfabschnitte (15) angeordnet ist.

14. Blindnietelement (1) nach Anspruch 13, **dadurch gekennzeichnet, dass** der jeweilige Vorsprung mit einer der in der axialen Richtung (Z) verlaufenden Schwächungsstellen (7) in der axialen Richtung (Z) fluchtet.

15. Verwendung des Blindnietelements (1) gemäß einem der Ansprüche 1 bis 14 zum lagegenauen Vernieten mit einem Bauteil (16), insbesondere zwecks Toleranzausgleichs, wobei ein in einem Setzloch (17) des Bauteils (16) angeordneter Abschnitt des Schafts (3) eine radiale Abmessung aufweist, die geringer ist als eine radiale Abmessung des Setzlochs (17), insbesondere der in dem Setzloch (17) angeordneter Abschnitt des Schafts (3) einen Außendurchmesser (D2) aufweist, der geringer ist als ein Durchmesser (D4) des Setzlochs (17).
